# EUROPÄISCHE PATENTSCHRIFT

(11) **EP 1 979 972 B1**
(45) Veröffentlichungstag und Bekanntmachung des Hinweises auf die Patenterteilung: **18.11.2015**
(21) Anmeldenummer: 07717975.2
(22) Anmeldetag: 23.01.2007
(51) Int. Cl.: B01D 71/82, C08J 3/09, C08J 5/22, H01M 8/02, H01M 8/10

(54) **PHOSPHONSÄUREHALTIGER ELEKTROLYT**
ELECTROLYTE CONTAINING PHOSPHONIC ACID
ÉLECTROLYTE CONTENANT DE L'ACIDE PHOSPHONIQUE

(30) Priorität: 23.01.2006 DE 102006003316
(43) Veröffentlichungstag der Anmeldung: 15.10.2008
(73) Patentinhaber: Between Lizenz GmbH, 70619 Stuttgart (DE); Häring, Thomas, 70619 Stuttgart (DE)
(72) Erfinder: HÄRING, Thomas, 70619 Stuttgart (DE)
(86) Internationale Anmeldenummer: PCT/DE2007/000133
(87) Internationale Veröffentlichungsnummer: WO 2007/082526

(56) Entgegenhaltungen:
- EP-A2- 0 688 824
- WO-A-00/27513
- WO-A-03/067691
- JP-A- 2005 203 316
- US-A1- 2005 053 818
- US-A1- 2006 257 705
- C. HASIOTIS ET AL.: "New polymer electrolytes based on blends of sulfonated polysulfones with polybenzimidazole" ELECTROCHIMICA ACTA, Bd. 46, Nr. 15, 30. April 2001 (2001-04-30), Seiten 2401-2406, XP004234034 ISSN: 0013-4686
- J.K. KALLITSIS ET AL.: "Proton Conducting Membranes Based on Polymer Blends for Use In High Temperature PEM Fuel Cells" JOURNAL OF NEW MATERIALS FOR ELECTROCHEMICAL SYSTEMS, Bd. 6, Nr. 4, Oktober 2003 (2003-10), Seiten 217-222, XP001186292 ISSN: 1480-2422

## Beschreibung

Stand der Technik:

Membranen aus nichtwasserlöslichen sulfonierten Polymeren, die zusätzlich niedermolekulare Phosphonsäuren enthalten sind durch bekannte Nachbehandlungsmethoden der sulfonierten Membran nicht herstellbar.

Die nachfolgende Erfindung betrifft ein Verfahren zur Herstellung eines Elektrolyten das dieses und andere Probleme löst.

Als nächstliegender Stand der Technik werden nachfolgende Dokumente aufgeführt.

JP 2005 203316A (JSR Corp.) vom 28.07.2005 beschreibt eine protonenleitende Membran enthaltend ein sulfoniertes Polymer und mindestens eine niedermolekulare saure Verbindung, wobei auch Phosphonsäuren berücksichtigt werden. Es sind allerdings keine basischen Phosphonsäuren und Blends aus basischen Phosphonsäuren und **sulfonierten Polymeren** beschrieben.

In US 2005/053818 A1 (SIM COMPOSITES INC.) vom 10.3.2005 ist ein Ionenaustauschverbundmaterial auf Basis von protonenleitenden funktionalisierten anorganischen Trägerverbindungen in einer Polymermatrix, insbesondere einem Polyetherketon, und die Verwendung dieses Materials als Membran in Membranverfahren, insbesondere als Protonenaustauschmembran in Brennstoffzellen beschrieben.

WO 03/067691A (BATELLE MEMORIAL INSTUTE) vom 14.August 2003 beschreibt die Verwendung von **sulfonierten Polymeren.**

In JOURNAL OF NEW MATERIALS FOR ELECTROCHEMICAL SYSTEMS, Bd. 6, Nr. 4, Oktober 2003, Seiten 217-222 und in WO 00/27513A (AXIVA GmbH) vom 18. Mai 2000 sind polymere Säure-Base-Blends beschrieben.

In ELECTROCHIMICA ACTA, Bd. 46, Nr. 15, 30. April 2001, Seiten 2401-2406 wird ebenso ein Säure-Base-Blend aus **sulfonierten Polymeren** und der polymeren Base Polybenzimidazol (PBI) beschrieben.

In EP-A2-0 688 824 (HÖCHST AG, PEMEAS GmbH) vom 27. Dezember 1995 werden homogene Polymerlegierungen, enthaltend als Hauptbestandteile sulfonierte, aromatische Polyetherketone und mindestens ein aromatisches Polysulfon beschrieben.

Keines der vorgestellten Dokumente offenbart die Herstellung einer Lösung aus sulfonierten Polymeren und einer basischen Phosphonsäure, insbesondere Aminophosphonsäure, und aus diesen Lösungen hergestellte Membranen.

### Beschreibung:

Niedermolekulare Phosphonsäuren sind nicht oder nur sehr schlecht in organischen Lösungsmitteln löslich. Dies gilt besonders für die aprotischen Lösungsmitteln wie zum Beispiel NMP, DMSO, DMF und DMAc.

Sulfonierte Polymere wie sulfonierte Polysulfone oder sulfonierte Polyetherketone werden in Form von Membranen in der Technik eingesetzt. Es wäre nun wünschenswert diese Polymere mit niedermolekularen Phosphonsäuren zu blenden. Dabei stellt man jedoch fest, dass sich die Phosphonsäuren nicht oder nur sehr schlecht in den aprotischen Lösungsmitteln lösen. Dies gilt insbesondere für die Aminophosphonsäuren. Versuche, Membranen aus sulfoniertem Polyetherketon in den wässrigen Lösungen der entsprechenden Phosphonsäuren nachzubehandeln, zeigen, dass die Phosphonsäuren nur in sehr geringem Umfang in die Membran eindringen. Dies ändert sich auch nicht bei Temperatur- oder Konzentrationserhöhung der wässrigen Phosphonsäurelösung. Verwendet werden Membranen, deren Ionenaustauschkapazität unterhalb der Löslichkeit in Wasser ist. Die Grenze zur Wasserlöslichkeit liegt je nach verwendetem Polymer ungefähr bei 2,0 Milliäquivalent je Gramm (meq/gr.). Für Polymere mit fluoriertem oder teilfluoriertem Backbone liegt die Grenze zur Wasserlöslichkeit bei ca. 2,4 meq/gr.. Sulfoniertes PEEK beginnt sich bereits bei einer Ionenaustauschkapazität (IEC) von 1,8-1,85 in erhitztem Wasser zu lösen.

Nachfolgen wird ein Verfahren vorgestellt mit dem es dennoch möglich ist niedermolekulare Phosphonsäuren mit **sulfonierten Polymeren** in organischen Lösungsmitteln zu mischen und wie man aus diesen Gemischen Partikel, Membranen, Formkörper und Beschichtungen herstellen kann.

**Gemäß dem Anspruch 1 handelt es sich dabei um ein** *Verfahren zur Darstellung einer Lösung von sulfoniertem Polymer und einer basischen Phosphonsäure, dadurch gekennzeichnet, dass das Polymer in einem aprotischen Lösungsmittel aufgelöst wird und zu dieser Lösung die basische Phosphonsäure hinzugegeben wird.*

Es wurde folgender vollkommen überraschender und neuer Effekt gefunden.

Amino Tris(methylene phosphonsäure) (ATMP) ist eine niedermolekulare Aminophosphonsäure und nicht oder nur in sehr geringem Umfang in organischen Lösungsmitteln, insbesondere in aprotischen Lösungsmitteln wie Sulfolan, NMP, DMAc, DMF und DMSO, löslich. Dies ändert sich jedoch wenn man ein sulfoniertes Polymer in einem der aprotischen Lösungsmittel auflöst und zu dieser Lösung die entsprechende Aminophosphonsäure hinzu gibt.

Die Phosphonsäure ist zuerst unlöslich und löst sich langsam in der Lösung des bereits gelösten Polymers auf. Die Lösung geschieht wahrscheinlich aufgrund einer Säure-Base-Wechselwirkung zwischen dem basischen Stickstoff und der Sulfonsäuregruppe. Da die Säurestärke der Sulfonsäure größer ist als die der Phosphonsäure selbst, wird über diesen Weg die Aminophosphonsäure in dem sauren Polymer gelöst. Es handelt sich um die Immobilisierung einer niedermolekularen Base, die noch eine weitere funktionelle Gruppe, in diesem Fall die Phosphonsäure, besitzt. Als Base kann jede Verbindung verwendet werden, die in der Lage ist mit der Sulfonsäuregruppe des Polymers eine ionische Wechselwirkung einzugehen. Besonders bevorzugtes Lösungsmitteln ist DMSO. Es wurde überraschend festgestellt, dass sich in einer Lösung aus NMP und sulfoniertem Polyetherketon sich nicht die berechneten äquivalenten Mengen der Aminophosphonsäuren lösen. Dies gilt besonders für Aminophosphosphonsäuren, die mehr als eine NCP-Gruppierung enthalten. Ein Beispiel hierfür ist Diethylen-triamino-pentamethylen-phosphonsäure (DTPMP). Theoretisch kann man zu jedem Molekül Sulfonsäure auf der Polymerkette maximal ein Molekül DTPMP hinzugeben. Dies gelingt aber in NMP nicht.

In DMSO ist es möglich. Der Grund dafür ist wahrscheinlich, dass NMP selbst ein basisches Molekül ist. Es entsteht eine Konkurrenzsituation zwischen der Aminogruppe und dem NMP (N-Methylpyrolidon) um die Sulfonsäuregruppe.

Je eine Sulfonsäuregruppierung auf der Polymerkette kann ein niedermolekulares basisches Molekül, über die Säure-Base-Wechselwirkung, immobilisieren. Geht man darüber hinaus, dann ist der Überschuß nicht mehr löslich in dem verbleibenden Lösungsmittel.

Es spielt keine Rolle in welcher Reihenfolge man die Komponenten Lösungsmittel, sulfoniertes Polymer und Aminophosphonsäure zusammen gibt. In jedem Fall löst sich zuerst die Sulfonsäure und diese löst dann ihrerseits wieder die eigentlich unlösliche Aminophosphonsäure durch die Säure-Base-Wechselwirkung.

Das basische Molekül wird durch die allgemeine Formel R₂N-CR₂-PO₃H₂., wobei R unabhängig voneinander ein Alkyl-, Aryl-, Heteroarylrest, ein beliebig substituiertes C-Atom oder Wasserstoff ist. Das Substitutionsmuster hat einzig die Einschränkung, dass es die Säure-Base-Wechselwirkung zwischen dem Stickstoff und der Sulfonsäure nicht aufheben darf. Im Falle von ATMP (Aminotrismethylenphosphonsäure) sind beide Reste R am Stickstoff identisch und R ist -CH₂-PO₃H₂ und R am Kohlenstoff ist Wasserstoff Wird nun der Stickstoff protoniert erhält man R₂NH⁺-CH₂-PO₃H₂ und die Säurestärke des Phosphonsäurerestes steigt stark an. Das hat eine höhere Protonenleitfähigkeit zur Folge.

Bevorzugt sind ebenso Verbindungen mit der allgemeinen Formel R₂N-CR-(PO₃H₂)₂ wobei R wieder wie oben definiert ist. Ein Beispiel für diese Verbindungsklasse, die Bisphosphonsäuren ist Dimethylaminomethylendiphosphonsäure (MAMDP) (Me₂N)CH(PO₃H₂)₂ und Aminoethylendiphosphonsäure (MeC(NH₂)(PO₃H₂)₂, wobei Me für CH₃ steht.

Ebenso sind Verbindungen bevorzugt in denen die Gruppierung R₂N-CR der allgemeinen Formel R₂N-CR₂-PO₃H₂ zu einem Heterozyklus, z.B. Pyridin, Imidazol, Triazol geschlossen wurden oder Teil eines Heterozyklischen Systems sind.

Entscheidend für die Anhebung der Säurestärke der Phosphonsäure ist die Abfolge der Atome NCP.

Beispiele für verwendete Aminophosphonsäuren sind: Aminotrismethylenphosphonsäure, Diethylentriaminopenta-methylenphosphonsäure, Ethylendiaminotetramethylenphosphonsäure und Pentaethylenehexamine-octakis-methylenphosphonsäure. Die Aufzählung ist nicht erschöpfend und kann vom Fachmann beliebig erweitert werden.

Die Aminophosphonsäuren werden in den Lösungen der sulfonierten Polymere aufgelöst. Als sulfonierte Polymere können alle Polymere verwendet werden, die sich in den beschriebenen aprotischen Lösungsmitteln auflösen. Die bevorzugte Ionenaustauschkapazität (IEC) der sulfonierten Polymere liegt zwischen 0,5 und 5 Milliäquivalent je Gramm. Besonders bevorzugt ist der Bereich von 0,8 und 2,0 Milliäquivalent je Gramm.

Beispiell : Sulfoniertes Polyetherketon mit einer Ionenaustauschkapazität (IEC) von 1,8 Milliäquivalent wird in DMSO gelöst. Verwendet werden 50 Gramm einer 10% Gew. Lösung. Die Lösung enthält 5 Gramm sulfoniertes Polymer. Zu dieser Lösung gibt man äquivalent zur Sulfonsäuregruppe die Aminphosphonsäure Diethylen-triamino-pentamethylen-phosphonsäure (DTPMP) hinzu. Maximal können fast 5 Gramm hinzugegeben werden. In dem Beispiel hier werden 3 Gramm hinzugefügt. Die Aminopühosphonsäure löst sich nun auf.

Die Lösung wird auf einer Glasplatte zu einem dünnen Film ausgerakelt. Die Filmdicke beträgt ungefähr 600 µm. Das Lösungsmittel wird bei einer Temperatur von ca. 100°C im Trockenschrank abgedampft. Dies ist ein gängiges Verfahren um Membranen herzustellen. Nach dem das Lösungsmittel vollständig entfernt wurde löst man den Film vorsichtig von der Glasplatte ab. Dies wird vereinfacht wenn die Platte noch warm ist oder man befeuchtet mit einer Sprühflasche vorsichtig die Folie. Sie löst sich dann leichter von der Platte.

Die erhaltene Folie wird danach in 80%ige Phosphorsäure eingelagert und bei 60°C in den Ofen gestellt. Dabei nimmt die Folie Phosphorsäure auf.

Nach der Nachbehandlung mit der Phosphorsäure (PA) besitzt die Membran eine Protonenleitfahigkeit sowohl bei Temperaturen um 20°C als auch bei höheren Temperaturen.

Beispiel2: Sulfoniertes Polyetheretherketon mit einer Ionenaustauschkapazität (IEC) von 1,3 Milliäquivalent wird in heißem DMSO gelöst. Verwendet werden 50 Gramm einer 10% Gew. Lösung. Die Lösung enthält 5 Gramm sulfoniertes Polymer. Zu dieser Lösung gibt man äquivalent zur Sulfonsäuregruppe die Aminphosphonsäure Diethylen-triamino-pentamethylen-phosphonsäure (DTPMP) hinzu. Maximal können fast 2 Gramm, in dem Beispiel hier werden 1,5 Gramm hinzugefügt. Die Aminophosphonsäure löst sich nun auf.

Beispiel 3: Sulfoniertes Polyetherketon (SPEK) mit einer Ionenaustauschkapazität (IEC) von 1,8 Milliäquivalent wird in DMSO gelöst. Verwendet wird eine 15% Gew. Lösung. Zu dieser Lösung gibt man äquivalent zur Sulfonsäuregruppe die Aminphosphonsäure Diethylentriamino-penta-methylen-phosphonsäure (DTPMP) hinzu.

Die Lösung wird auf einer Glasplatte zu einem dünnen Film ausgerakelt. Die Filmdicke beträgt ungefähr 600 µm. Das Lösungsmittel wird bei einer Temperatur von ca. 100°C im Trockenschrank abgedampft. Dies ist ein gängiges Verfahren um Membranen herzustellen. Nach dem das Lösungsmittel vollständig entfernt wurde löst man den Film vorsichtig von der Glasplatte ab. Dies wird vereinfacht wenn die Platte noch warm ist oder man befeuchtet mit einer Sprühflasche vorsichtig die Folie. Sie löst sich dann leichter von der Platte.

Die erhaltene Folie wird danach in 80%ige Phosphorsäure eingelagert und bei 60°C in den Ofen gestellt. Dabei nimmt die Folie Phosphorsäure auf.

Nach der Nachbehandlung mit der Phosphorsäure (PA) besitzt die Membran eine Protonenleitfahigkeit sowohl bei Temperaturen um 20°C als auch bei höheren Temperaturen. Die Membran ist hygroskopisch und nimmt begierig Wasser aus der Umgebungsluft auf. Die Protonenleitfähigkeit beruht zum einen auf dem wasserhaltigen Leitungsmechanismus und im wasserfreien Zustand auf der aufgenommenen Phosphorsäure. Enthält die Membran 1 Gramm SPEK und 1,03 Gramm DTPMP so ist die Aminophosphonsäure genau mit einem Stickstoffatom an das sulfonierte Polymer gebunden. Die zwei verbleibenden Stickstoffatome lagern nun jeweils ein Molekül Phosphorsäure (PA) an. Dabei ergeben sich nun folgende Ionenaustauschkapazitäten: SPEK = 1,8 und SPEK+DTPMP = 9,75 und SPEK+DTPMP+PA = 12,83. D.h. die Ionenaustauschkapazität des Ausgangspolymers ist stark angestiegen und damit auch die Protonenleitfähigkeit.

Sulfonierte Polymere mit immobilisierten Aminophosphonsäuren eignen sich sehr gut als Elektrolyt in der Direktmethanolbrennstoffzelle. Der Methanoldurchbruch durch eine solche Membran ist deutlich niedriger im Vergleich zu den reinen sulfonierten Polymeren. Besonders bevorzugt sind hier die Aminophosphonsäuren, die mehr als ein basisches Zentrum besitzen. Dazu gehört z.B. DTPMP und Pentaethylenehexamine-octakis-methylenphosphonsäure. Bevorzugt ist bei Verwendung von diesen Phosphonsäuren ein Verhältnis von 1:2 bezogen auf Phosphonsäuremolekül zu Sulfonsäuregruppen. D.h. eine Aminophosphonsäure bildet eine ionische Bindung zu zwei Sulfonsäuren aus. Dadurch entsteht eine Vernetzung, die die mechanischen Eigenschaften der Membran verbessern. Die Ionenaustauschkapazität (IEC) nimmt dadurch nicht so stark zu wie im Verhältnis 1:1, aber immer noch ausreichend um eine deutliche Erhöhung der Protonenleitfahigkeit zu erreichen. Bei der Venvendung von ATMP ist eine Vernetzung natürlich nicht möglich, da dieses Molekül nur ein Stickstoffatom besitzt.

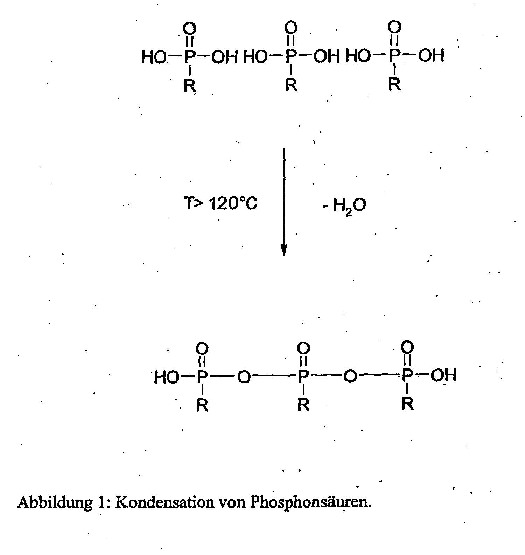

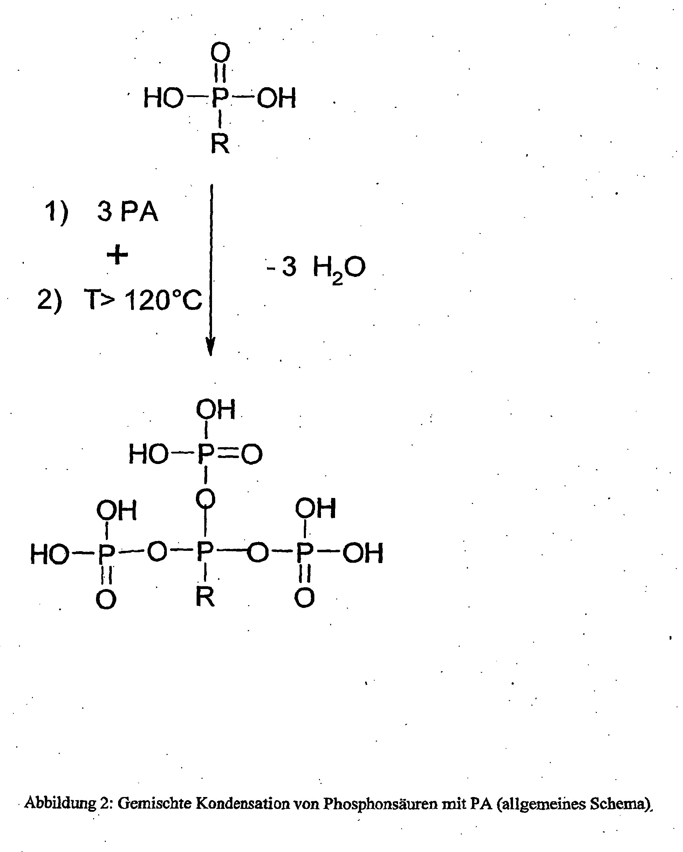

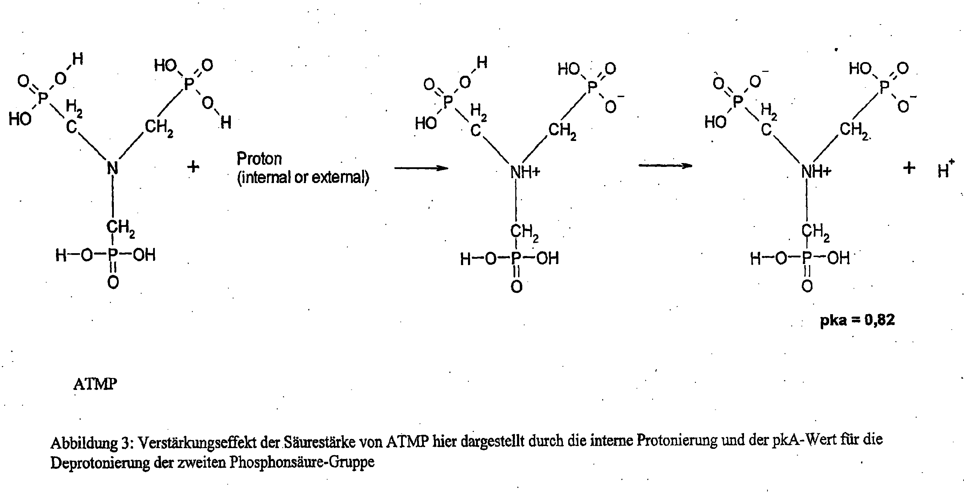

## Patentansprüche

1. Verfahren zur Darstellung einer Lösung von sulfoniertem Polymer und einer basischen Phosphonsäure, **dadurch gekennzeichnet, dass** das Polymer in einem aprotischen Lösungsmittel aufgelöst wird und zu dieser Lösung die basische Phosphonsäure hinzugegeben wird.

2. Verfahren nach Anspruch 1 **dadurch gekennzeichnet, dass** das aprotische Lösungsmittel ausgewählt ist aus NMP, DMAc, Sulfolan, DMF und DMSO.

3. Verfahren nach Anspruch 1 **dadurch gekennzeichnet, dass** die basische Phosphonsäure entweder
eine niedermolekulare Aminophosphonsäure mit der allgemeinen Formel R₂N-CR₂-PO₃H₂ wobei R unabhängig voneinander ein Alkyl-, Aryl-, Heteroarylrest, ein beliebig substituiertes C-Atom oder Wasserstoff ist,
oder
eine niedermolekulare Aminophosphonsäure mit der allgemeinen Formel R₂N-CR-(PO₃H₂)₂ wobei R wie oben definiert ist,
oder
eine niedermolekulare Aminophosphonsäure mit der allgemeinen Formel R₂N-CR-(PO₃H₂)₂ in der die Gruppierung R₂N-CR- zu einem Heterozyklus wie, z.B. Pyridin, **Imidazol oder** Triazol geschlossen ist, oder Teil eines heterozyklischen Systems ist,
**sein kann.**

4. Verfahren nach Anspruch 1 **dadurch gekennzeichnet, dass** die basische Phosphonsäure Aminotrismethylenphosphonsäure, Diethylentriaminopentamethylenphosphonsäure, Ethylendiaminotetramethylenphosphonsäure, Pentaethylenehexamine-octakis-methylenphosphonsäure, Dimethylaminomethylendiphosphonsäure (MAMDP) oder Aminoethylendiphosphonsäure (AEDP) ist.

5. Verfahren nach Anspruch 1 **dadurch gekennzeichnet, dass** die Ionenaustauscherkapazität (IEC) des sulfonierten Polymers zwischen 0,5 und 5 Milliäquivalent je Gramm beträgt, wobei der Bereich von 0,8 bis 2 Milliäquivalent je Gramm bevorzugt ist.

6. Lösung erhältlich nach einem Verfahren gemäß vorhergehenden Ansprüchen 1 bis 5.

7. Verwendung der Lösungen nach Anspruch 6 zur Herstellung von Membranen, Paatikeln, Beschichtungen und Formkörpern.

8. Verfahren zur Herstellung von Membranen **dadurch gekennzeichnet, dass** die Lösung nach Anspruch 6 auf einer Glasplatte zu einem dünnen Film ausgerakelt wird und das Lösungsmittel bei einer Temperatur von ca. 100°C abgedampft wird und die Membran danach von der Glasplatte abgelöst wird.

9. Membran, Partikel, Beschichtung oder Formkörper die erhalten werden durch Verwendung der Lösung nach Anspruch 6.

10. Verfahren nach Anspruch 8 **dadurch gekennzeichnet, dass** die Membran zusätzlich noch mit Phosphonsäure dotiert wird.

11. Mit Phosphorsäure dotierte Membran erhältlich nach einem Verfahren gemäß Anspruch 10.

12. Verwendung der Membran nach Anspruch 9 oder 11 in Membranverfahren insbesondere in Brennstoffzellen.

13. Verwendung nach Anspruch 12 in Direktmethanolbrennstoffzellen.

14. Membran nach Anspruch 9 oder 11 **dadurch gekennzeichnet, dass** das Verhältnis von Phosphonsäuremolekül zu Sulfonsäuregruppen 1:2 beträgt, wobei die verwendete Phosphonsäure mehr als ein basisches Zentrum besitzt.

## Claims

1. Process for preparing a solution of sulfonated polymer and a basic phophonic acid, **characterized in that** the polymer is dissolved in an aprotic solvent and to this solution the basic phosphonic acid is added.

2. Process according to claim 1, **characterized in that** the aprotic solvent is selected from NMP, DMAc, sulfolane, DMF and DMSO.

3. Process according to claim 1, **characterized in that** the basic phosphonic acid either
a low molecular weight amino phosphonic acid with the general formula R₂N-CR₂-PO₃H₂, wherein R is independently of one another an alkyl, aryl, heteroaryl. arbitrarily substituted carbon atom or hydrogen,
or
a low molecular weight amino phosphonic acid with the general formula R₂N-CR-(PO₃H₂)₂ wherein R is defined as above,
or
a low molecular weight amino phosphonic acid with the general formula R₂N-CR-(PO₃H₂)₂ in there the group RN-CR- is closed to form a heterocycle such as, for example, pyridine, imidazole or triazole or part of a heterocycle system is,
may be.

4. Process according to claim 1, **characterized in that** the basic phosphonic acid is aminotrismethylene phosphonic acid, **diethylenetriamine penta(methylene phosphonic acid**), ethylendiaminotetra**(methylene phosphonic acid)**, Pentaethylenehexamine-octakis-(**methylene phosphonic acid**), Dimethylamino-**(methylene di phosphonic acid)** (MAMDP) or Ammoethylen**(di phosphonic acid)** (AEDP).

5. Process according to claim 1 , **characterized in that** the ion exchange capacity (IEC) of the sulfonated polymer is between 0.5 and 5 milliequivalents per gram, wherein the range of 0.8 to 2 milliequivalents per gram is preferred.

6. Solution obtainable according to one of the preceding claims 1 to 5.

7. Use of the solutions according to claim 1 for the production of membranes, particles, coatings and moldings.

8. Process for the production of membranes, **characterized in that** the solution of claim 6 is knife-coated on a glass plate to form a thin film and the solvent is evaporated at a temperature of about 100°C and the membrane is subsequently removed from the glass plate.

9. Membrane , particle, coating, or molded article obtained by using the solution of claim 6.

10. Process according to claim 8, **characterized in that** the membrane is additionally doped with phosphoric acid.

11. Membrane doped with phosphoric acid available according to a process according to claim 10.

12. Use of the membrane according to claim 9 or 11 in membrane processes, especially in fuel cells.

13. Use according to claim 12 in direct methanol fuel cells.

14. The membrane of claim 9 or 11, **characterized in that** the ratio of phosphonic acid molecule to sulfonic acid groups is 1:2, wherein the used phosphonic acid has more than one basic center.

## Revendications

1. Procédé pour la représentation d'une solution de polymère sulfoné et d'acide phosphonique basique, **caractérisé par le fait que** le polymère est dissous dans un solvant aprotique et que l'acide phosphonique basique est ajouté à cette solution.

2. Procédé selon la revendication 1, **caractérisé par le fait que** le solvant aprotique est choisi parmi les solvants NMP, DMAC, sulfolane, DMF et DMSO.

3. Procédé selon la revendication 1, **caractérisé par le fait que** l'acide phosphonique basique peut être soit
un acide aminophosphonique de faible poids moléculaire de formule générale R₂N-CR₂-PO₃H₂, où R représente, indépendamment les uns des autres, une fraction alkyle, aryle, hétéroaryle, un quelconque atome de carbone substitué ou de l'hydrogène,
soit
un acide aminophosphonique de faible poids moléculaire de formule générale R₂N-CR-(PO₃H₂)₂, où R est tel que défini ci-dessus
soit
un acide aminophosphonique de faible poids moléculaire de formule générale R₂N-CR-(PO₃H₂)₂, dans lequel les atomes groupe R₂N-CR- est lié à un hétérocycle comme p. ex. pyridine, imidazole ou triazole ou fait partie d'un système hétérocyclique.

4. Procédé selon la revendication 1, **caractérisé par le fait que** l'acide d'acide phosphonique basique (portant au moins un centre basique)_est de l'acide aminotriméthylènephosphonique, de l'acide diéthylène triamine penta méthylènephosphonique, de l'acide éthylènediamine tétraméthylènephosphonique, de l'acide pentaéthylène hexamine octakis méthylènephosphonique, de l'acide diméthylaminométhylène diphosphonique (MAMDP) ou de l'acide aminoéthylène diphosphonique (AEDP).

5. Procédé selon la revendication 1, **caractérisé par le fait que** la capacité d'échange d'ions (CEI) du polymère sulfoné s'élève de 0,5 à 5 milliéquivalents par gramme, la plage de 0,8 à 2 milliéquivalents par gramme aura néanmoins la préférence.

6. Solution obtenue selon l'une des revendications 1 à 5 précédentes.

7. Utilisation de la solution selon la revendication 1 pour la production de membranes, particules, revêtements et corps moulés.

8. Procédé pour la production de membranes, **caractérisé par le fait que** la solution est appliquée à la racle selon la revendication 6 sur une plaque de verre pour former un film mince et que le solvant est évaporé à une température d'environ 100°C et que la membrane est ensuite détachée de la plaque de verre.

9. Membrane, particule, revêtement ou corps moulé qui ont été obtenus par le biais de l'utilisation de la solution issue de la revendication 6.

10. Procédé selon la revendication 8, **caractérisé par le fait que** la membrane est en outre dopée avec de l'acide phosphorique.

11. Membrane dopée avec de l'acide phosphorique obtenue de la revendication 10.

12. Utilisation de la membrane selon la revendication 9 ou 11 dans les procédés membranaires, en particulier dans les piles à combustible.

13. Utilisation selon la revendication 12 dans des piles à combustible à méthanol direct.

14. Membrane selon la revendication 9 ou 11 , **caractérisé par le fait que** le rapport de molécule d'acide phosphonique par groupes d'acides sulfonique est dans l'interval 1:2, dans lequel l'acide phosphonique utilisé a plus d'un centre de base.
